(19) Europäisches Patentamt
European Patent Office
Office européen des brevets

(11) **EP 4 038 753 B1**

(12) **EUROPEAN PATENT SPECIFICATION**

(45) Date of publication and mention
of the grant of the patent:
**06.12.2023 Bulletin 2023/49**

(21) Application number: **19784016.8**

(22) Date of filing: **03.10.2019**

(51) International Patent Classification (IPC):
**H04B 7/06** $^{(2006.01)}$  **H04L 25/02** $^{(2006.01)}$

(52) Cooperative Patent Classification (CPC):
**H04L 25/0202; H04B 7/0695; H04L 25/0224;
H04L 25/0254**

(86) International application number:
**PCT/EP2019/076792**

(87) International publication number:
**WO 2021/063509 (08.04.2021 Gazette 2021/14)**

(54) **RECEPTION AND DECODING OF DATA IN A RADIO NETWORK**

EMPFANG UND DEDODIERUNG VON DATEN IN EINEM FUNKNETZ

RÉCEPTION ET DÉCODAGE DE DONNÉES DANS UN RÉSEAU RADIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.08.2022 Bulletin 2022/32**

(73) Proprietor: **TELEFONAKTIEBOLAGET LM
ERICSSON (PUBL)
164 83 Stockholm (SE)**

(72) Inventor: **RAMIREZ-GUTIERREZ, Raymundo
226 47 LUND (SE)**

(74) Representative: **Ericsson
Patent Development
Torshamnsgatan 21-23
164 80 Stockholm (SE)**

(56) References cited:
**CN-A- 109 756 432**

• **XIAOFENG LI ET AL: "Generative Adversarial
Estimation of Channel Covariance in Vehicular
Millimeter Wave Systems", ARXIV.ORG,
CORNELL UNIVERSITY LIBRARY, 201 OLIN
LIBRARY CORNELL UNIVERSITY ITHACA, NY
14853, 7 August 2018 (2018-08-07), XP081412891,**
• **QI SHI ET AL: "Channel Estimation for WiFi
Prototype Systems with Super-Resolution Image
Recovery", ARXIV.ORG, CORNELL UNIVERSITY
LIBRARY, 201 OLIN LIBRARY CORNELL
UNIVERSITY ITHACA, NY 14853, 25 February
2019 (2019-02-25), XP081032848,**
• **HENGTAO HE ET AL: "Deep Learning-based
Channel Estimation for Beamspace mmWave
Massive MIMO Systems", ARXIV.ORG, CORNELL
UNIVERSITY LIBRARY, 201 OLIN LIBRARY
CORNELL UNIVERSITY ITHACA, NY 14853, 5
February 2018 (2018-02-05), XP081214929,**

EP 4 038 753 B1

## Description

### TECHNICAL FIELD

Embodiments presented herein relate to a method, a network node, a computer program, and a computer program product for decoding data received from a terminal device.

### BACKGROUND

In communications networks, there may be a challenge to obtain good performance and capacity for a given communications protocol, its parameters and the physical environment in which the communications network is deployed.

For example, one parameter in providing good performance and capacity for a given communications protocol in a communications network is information of the radio propagation channel between transmitter and receiver, such as between transmission and reception points at the network side and terminal devices at the user side. Further, channel state information (CSI) refers to known channel properties of a communication link. This information describes how a signal propagates from the transmitter to the receiver and represents the combined effect of, for example, scattering, fading, and power decay with distance between transmitter and receiver. CSI can be obtained by means of channel estimation. The CSI makes it possible to adapt transmissions to current channel conditions, which is crucial for achieving reliable communication with high data rates in multiantenna systems. In some examples the CSI is represented by a channel matrix. In general terms, the information of the radio propagation channel might thus be represented by a channel matrix.

CSI is commonly obtained through measurements on known signals, or pilots. Pilots thus represent known information that can be used by the receiver to correctly decode data sent by the transmitter. CSI needs to be obtained for each time slot data is to be decoded and hence channel estimation also needs to be performed for each slot data is to be decoded.

Another parameter in providing good performance and capacity for a given communications protocol in a communications network is latency. Services requiring low latency thus require fast channel estimation procedures to guarantee good performance or at least to avoid performance degradation.

CN109756432A shows an OFDM channel estimation method aiming for improvement of the performance of channel estimation and the overall performance of channel estimation and equalization.

Hence, there is a need for efficient channel estimation procedures, especially but not exclusively, in scenarios having high requirements on latency as well as throughput.

## SUMMARY

An object of embodiments herein is to provide decoding of data that utilizes efficiently obtained channel estimation.

According to a first aspect there is presented a method for decoding data received from a terminal device. The method is performed by a network node. The method comprises receiving data, from the terminal device, during a set of user conditions prevailing for the terminal device. The set of user conditions comprises a rank indicator value reported by the terminal device and a measurement performed by the network node on at least one reference signal received from the terminal device. The method comprises selecting, by providing the set of user conditions as input to a database, a channel matrix from the database. The database comprises a set of offline trained channel matrices. The method comprises decoding the received data for the terminal device using the selected channel matrix.

According to a second aspect there is presented a network node for decoding data received from a terminal device. The network node comprises processing circuitry. The processing circuitry is configured to cause the network node to receive data, from the terminal device, during a set of user conditions prevailing for the terminal device. The set of user conditions comprises a rank indicator value reported by the terminal device and a measurement performed by the network node on at least one reference signal received from the terminal device. The processing circuitry is configured to cause the network node to select, by providing the set of user conditions as input to a database, a channel matrix from the database. The database comprises a set of offline trained channel matrices. The processing circuitry is configured to cause the network node to decode the received data for the terminal device using the selected channel matrix.

According to a third aspect there is presented a computer program for decoding data received from a terminal device, the computer program comprising computer program code which, when run on a network node, causes the network node to perform a method according to the first aspect.

Advantageously, this method, these network nodes, this computer program, and this computer program product enable decoding of data that utilizes efficiently obtained channel estimation.

Advantageously, this method, these network nodes, this computer program, and this computer program product require the use of only few pieces of information, as given by the user conditions, to enable efficient (such as both fast and accurate) decoding of the data.

Advantageously, the efficient decoding of the data is enabled by means of using the database.

Advantageously, this method, these network nodes, this computer program, and this computer program product can be used in communication networks offering services, such as 4-D mapping, online gaming, high definition streaming, and other real-time scenarios, such as autonomous driving, that require low latency and high throughput.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 is a schematic diagram illustrating a communications network according to embodiments;

Fig. 2 schematically illustrates time needed to cross a narrow beam as a function of distance between terminal device transmission and reception point according to an embodiment;

Fig. 3 schematically illustrates a database, a transmission and reception point, and a network node according to an embodiment;

Figs. 4, 5, 6 and 7 are flowcharts of methods according to embodiments;

Fig. 8 is a schematic diagram showing functional units of a network node according to an embodiment;

Fig. 9 is a schematic diagram showing functional modules of a network node according to an embodiment;

Fig. 10 shows one example of a computer program product comprising computer readable storage medium according to an embodiment;

Fig. 11 is a schematic diagram illustrating a telecommunication network connected via an intermediate network to a host computer in accordance with some embodiments; and

Fig. 12 is a schematic diagram illustrating host computer communicating via a radio base station with a terminal device over a partially wireless connection in accordance with some embodiments.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

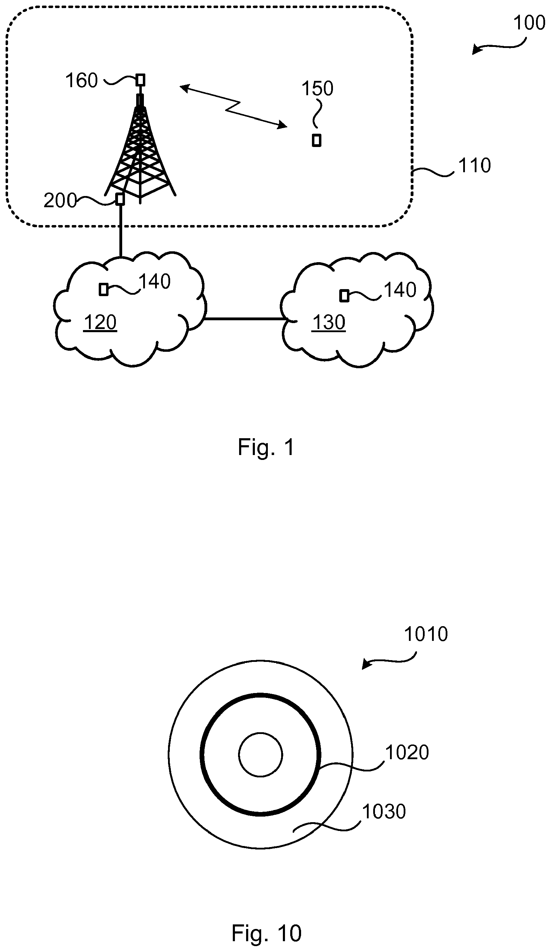

**Fig. 1** is a schematic diagram illustrating a communication network 100 where embodiments presented herein can be applied. The communications network 100 comprises a radio access network 110, a core network 120, and a service network 130. A transmission and reception point 160 is controlled by a network node 200 and provided in the radio access network 110 to provide network access to terminal devices 150 served by the network node 200. The terminal device 150 is thereby enabled to access services, and exchange data with, the service network 130. A database 140 is provided in either the core network 120 or in the service network 130.

The transmission and reception point 160 might be part of, integrated with, or collocated with, the network node 200. Alternatively, the transmission and reception point 160 is physically separated from the network node 200. The network node 200 might be a radio access network node, radio base station, base transceiver station, node B (NB), evolved node B (eNB), gNB, or access point. The terminal device 150 might be a portable wireless device, mobile station, mobile phone, handset, wireless local loop phone, user equipment (UE), smartphone, laptop computer, tablet computer, network equipped vehicle, or the like.

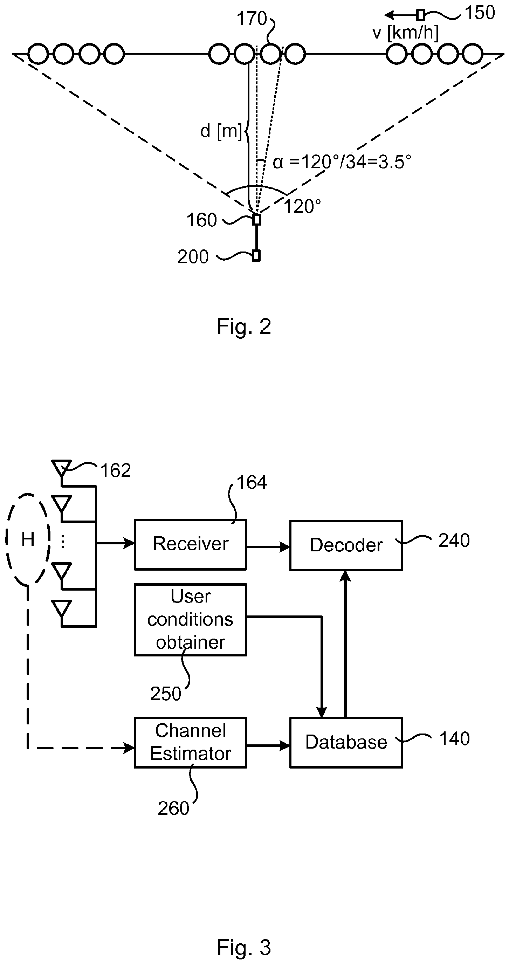

As noted above, there is a need for efficient channel estimation procedures, especially but not exclusively, in scenarios having high requirements on latency as well as throughput. This will be illustrated with reference to Fig. 2. **Fig. 2** illustrates the time needed to cross a narrow beam (one of which is indicated by reference numeral 170) and how the time will decrease as the distance between the terminal device 150 and the transmission and reception point 160 will decrease. Fig. 2 shows the worst-case scenario, where the transmission and reception point 160 is located perpendicular to the travel direction of the terminal device 150 and the terminal device 150 is likely to cross narrow beams in a shorter period than if the terminal device 150 was moving directly away from the transmission and reception point 160. The distance between the terminal device 150 and the transmission and reception point 160 is $d$ measured in meters, the width in degrees of each beam for the azimuth direction is $\alpha$, and the speed of the terminal device 150 is $v$ measured in km/h. The time $t$ measured in seconds spent in each narrow beam is then:

$$t=(d\cdot\tan(\alpha\cdot\pi/180))/(v/3.6)\ [s].$$

Based on Fig. 2, if there are 34 narrow beams along the azimuth direction and the transmission and reception point 160 is configured to serve a segment of 120°, then $\alpha$ =3.5° for the azimuth direction. The same reasoning also holds for the elevation direction. The transition between beams can traditionally only occur every 80 ms. In case the terminal device 150 is moving it could be necessary for the network node 200 to change beams to serve the terminal device 150 in more often than 80 ms. Otherwise the terminal device 150 might suffer from performance degradation, or even the operational link between the terminal device 150 and the network node 200 might be dropped or the performance would suffer massive degradation. However, if the periodicity according to which the beam transition might occur is reduced, the overhead increases and the room for actual data decreases.

The embodiments disclosed herein relate to mechanisms for decoding data received from a terminal device 150. In order to obtain such mechanisms there is provided a network node 200, a method performed by the network node 200, a computer program product comprising code, for example in the form of a computer program, that when run on a network node 200, causes the network node 200 to perform the method.

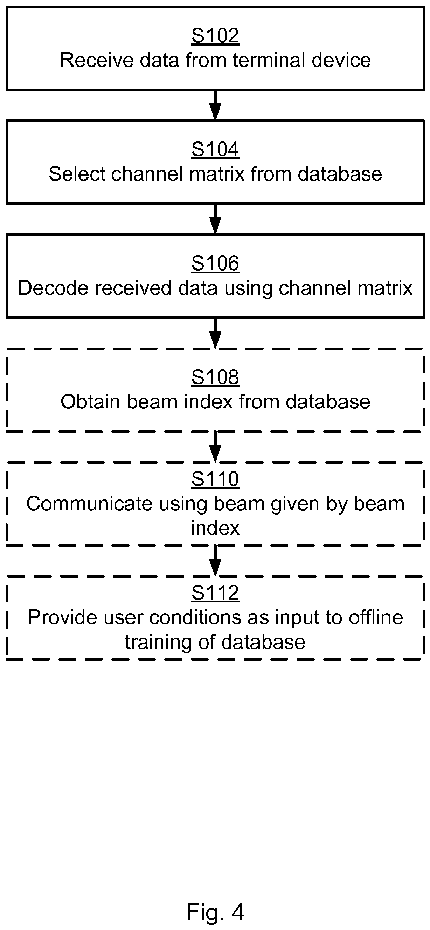

Fig. 3 schematically illustrates the database 140, the transmission and reception point 160, and the network node 200 according to an embodiment. The transmission and reception point 160 comprises a receiver 164 configured to receive signals from an array of antenna elements 162 and to provide the signals to the network node 200. The network node 200 comprises a decoder 240 configured to decode signals received from the receiver 164. As will be further disclosed below, data of the signals is decoded using a channel matrix as selected from the database 140 based on user conditions, as obtained by a user condition obtainer 250. Offline training of the database 140 can be performed by means of the user conditions and channel estimates, as provided by a channel estimator 260, of the radio propagation channel (as represented by H) between the network node 200 (or the antenna elements) and the terminal device 150 (not illustrated in Fig. 3). Further details relating thereto will be disclosed next with reference to the methods of Figs. 4, 5, 6, and 7.

Fig. 4 is a flowchart illustrating embodiments of methods for decoding data received from a terminal device 150. The methods are performed by the network node 200. The methods are advantageously provided as computer programs 1020.

It is assumed that data is received from the terminal device 150. In particular, the network node 200 is configured to perform S102:
S102: The network node 200 receives data from the terminal device 150. The data is received during a set of user conditions prevailing for the terminal device 150. The set of user conditions comprises a rank indicator value (i.e., the value of the rank indicator; RI) reported by the terminal device 150 and a measurement performed by the network node 200 on at least one reference signal received from the terminal device 150. Thus, some of the user conditions might by the network node 200 be obtained from the terminal device 150, and thus be accompanying the data or received separately from the data, whereas other user conditions might by the network node 200 be obtained by the network node 200 itself performing measurements. In any case, the user conditions are valid, and thus are indicative of characteristics of the radio propagation channel between the network node 200 and the terminal device 150 as prevailing when the data is received by the network node 200 from the terminal device 150 and, optionally, also other conditions of the terminal device 150 itself, as will be further disclosed below.

Based on the user conditions acting as input parameters, the network node 200 selects from the database 140 the most suitable channel matrix for decoding the data. Hence, the network node 200 is configured to perform S104 upon having received the data in S102:
S104: The network node 200 selects, by providing the set of user conditions as input to a database 140, a channel matrix from the database 140. The database 140 comprises a set of offline trained channel matrices.

The thus selected channel matrix is then used during decoding of the data. In particular, the network node 200 is configured to perform S106 upon having selected the channel matrix in S104:
S106: The network node 200 decodes the received data for the terminal device 150 using the selected channel matrix.

For example, if the decoded received data is denoted $x^\wedge_{data}$, then $x^\wedge_{data}$ can be obtained according to: $x^\wedge_{data} = \hat{H}_d{}^*y$, where $\hat{H}_d$ is the selected channel matrix, where $y$ is a vector of the received data, given as $y=H^*x_{data} + n$, where $H$ is the true channel matrix, where $x_{data}$ is a vector representing the data as transmitted by the terminal device 150, where $n$ is a vector representing noise added by the radio propagation channel, and where "*" denotes matrix multiplication.

This procedure of decoding data received from a terminal device 150 as performed by the network node 200 outperforms conventional decoding because of the efficient channel estimation procedure in S104. According to the herein disclosed embodiment the channel matrix used during the decoding does not need to be computed online, but instead a channel matrix is selected from a database 140 comprising a set of offline trained channel matrices. This selection is less time consuming and requires less computation resources than if the channel matrix were to be computed online. Although an online computed channel matrix would give a more accurate representation of the true characteristics of the radio propagation channel, training of the database 140 could increase the accuracy, in terms of representing the true characteristics of the radio propagation channel, of the channel matrices in the database.

Embodiments relating to further details of decoding data received from a terminal device 150 as performed by the network node 200 will now be disclosed.

In addition to the abovementioned user conditions, there could be further user conditions, either obtained from the terminal device 150 or measured, or derived, by the network node 200 itself or in collaboration with another entity. According to some non-limiting examples, the set of user conditions further comprises at least one of: Doppler frequency of the terminal device 150 relative the network node 200 (or the transmission and reception point 160), position of the terminal device 150 relative the network node 200 (or the transmission and reception point 160), direction of travel of the terminal device 150 relative the network node 200 (or the transmission and reception point 160), directivity of the terminal device 150 relative the network node 200 (or transmission and reception point 160), signal to interference plus noise ratio (SINR) for the terminal device 150, and channel quality indicator (CQI) for the terminal device 150. Such further conditions could further improve the accuracy of the selection of the channel matrix.

Further aspects of how the channel matrix might be selected in S104 will now be disclosed. In some aspects a classification of the user conditions is made to an appropriate index and the channel matrix corresponding to this index is selected from the database 140. In particular, according to an embodiment, providing the set of user conditions as input to the database 140 comprises classifying the set of user conditions to an index. The index is selected from a set of indices. Each index is associated with a set of known user conditions. The selected index is the one associated with a set of known user conditions best matching the set of user conditions. The index is provided as input to the database 140, and the selected channel matrix matches the thus inputted index in the database 140.

In some aspects, the method is extended to also involve efficient beam selection for serving the terminal device 150. The beam selection is made using the database 140 and is based on the aforementioned user conditions. For example, assuming that the network node 200 and the terminal device 150 communicate in a time-slotted fashion, i.e. a first time slot, a second time slot, a third time slot etc., where the time slots with adjacent numbers are adjacent in time. Then the data might be assumed to be received in a current time slot (e.g. the first time slot), then the user condition might be used to determine which beam is to be used by the network node 200 for communicating with the terminal device 150 in its next time slot (e.g., the second time slot, the time slot adjoining the current time slot). In particular, according to an embodiment, the data is received in a current time slot and the database 140 further comprises a set of beam indices, the network node 200 is configured to perform (optional) step S108:

S108: The network node 200 obtains, from the database 140 and upon having provided the set of user conditions as input to the database 140, a beam index from the set of beam indices.

The beam index is then mapped to the beam used by the network node 200 for communicating with the terminal device 150. In particular, according to this embodiment, the network node 200 is further configured to perform (optional) step S 110 upon having obtained the beam index:

S 110: The network node 200 communicates, using the beam given by the beam index, with the terminal device 150 during a time slot adjoining the current time slot.

Based on the user conditions acting as input parameters, the network node 200 might thus select the most suitable narrow beam for upcoming communication with (either transmission to, or reception from) the terminal device 150. This way of selecting the beam outperforms conventional beam selecting mechanisms, and might reduce the risk of beam failure, because the beam to be used in the next time slot is predicted only based on the user conditions. As will be disclosed in further detail below, this is particularly efficient where there might not be enough time (for example where the terminal device 150 is moving at high speed relative the network node 200) to perform a conventional beam search.

Further details of selecting the beam index from the database 140 will now be disclosed. As for the selection of the channel matrix, also the selection of the beam might be based on classifying the set of user conditions to an index. In some embodiments, providing the set of user conditions as input to the database 140 thus comprises classifying the set of user conditions to an index (different from the index used for the channel matrix). The index is selected from a set of indices as the one best matching the set of user conditions. The index is provided as input to the database 140, and the obtained beam index matches the thus inputted index in the database 140.

In some aspects, the herein disclosed beam selection is used in combination with conventional beam management (such as beam tracking and beam selection). In particular, in some embodiments, a separate (conventional) beam management procedure also is performed by the network node 200 for determining which beam to use for the adjoining time slot. For example, when the user conditions comprise the speed of the terminal device 150, it is possible for the network node 200 to determine whether the periodicity of the conventional beam management procedure is short enough to update the beam in which the terminal device 150 is to be served. In case that the periodicity is not short enough, the beam selected from the database 140 is used for the following time slot in which the terminal device 150 is to be served. In some embodiments, the set of user conditions thus defines a time window within which the beam to use for the adjoining time slot must be determined, and the beam given by the beam index only is used when the separate beam management procedure fails to be completed within the time window. This could, for example, be the case where the user conditions comprise the speed of the terminal device 150. In some aspects, the herein disclosed beam selection is thus used as backup to a conventional beam management procedure (such as for beam tracking and beam selection) in case the conventional beam management procedure has too long periodicity for being reported on time for following transmission. In particular, in some embodiments, the beam given by the separate (conventional) beam management procedure is (only) used when the separate beam management procedure is completed within the time window.

Further, reports of both wide beams and narrow beams might form part of the statistics according to which the database 140 is trained.

In some aspects, the set of user conditions are used to train the database 140. However, there could be different conditions as to when the set of user conditions are to be used to train the database 140. On such condition is the block error rate of the thus decoded received data. In general terms, only situations where the data has been decoded successfully (such as when the block error rate of the thus decoded received data is below a threshold value) should be considered when training the database 140. In particular, according to an embodiment, the network node 200 is configured to perform (optional) S 112:

S 112: The network node 200 provides the set of user conditions as input to offline training of the database 140 only when the block error rate of the thus decoded received data is below a threshold value.

There could be different values of the threshold value. In some non-limiting examples, the threshold value corresponds to a block error rate of less than or equal to 15%, preferably less than or equal to 10%, still preferably less than or equal to 5%.

There could be different ways in which the set of offline trained channel matrices is trained. In some embodiments the set of offline trained channel matrices have been trained using a neural network, machine learning, artificial intelligence, or the like. Further, in some embodiments, the offline training of the database 140 pertains to which inputted index to be mapped to which channel matrix in the set of offline channel matrices, and/or which channel matrices to be included in the set of offline channel matrices. Further, in some embodiments, the offline training of the database 140 pertains to which inputted index to be mapped to which beam index in the set of beam indices.

Thus, even though, the database 140 is trained in advance, the database 140 might be re-trained (so-called reinforcement training) to update how the channel matrices are selected and/or to update the channel matrices themselves. Likewise, the database 140 might be re-trained (reinforcement training) to update how the beams are selected and/or to update the beams (by means of antenna weights to be applied to the antenna elements 162) themselves.

Notwithstanding, the training will be performed offline to avoid latency increments. The training of the database 140 could be exhaustive, under several conditions to generate a broad database, capable of providing the most accurate channel matrices and/or beams despite extreme radio propagation conditions, such as high Doppler frequency and channel impairments.

There could be different types of reference signals. In some non-limiting examples, the reference signal is a demodulation reference signal (DMRS), a phase-tracking reference signal (PTRS), a sounding reference signal (SRS), or any combination thereof. For example, DMRS can be used by the network node 200 to estimate the channel matrix. For example, PTRS can be used by the network node 200 to track phase noise. For example, SRS can be used by the network node 200 to estimate channel conditions.

DMRS could be utilised under its lowest configuration (DMRS configuration type 1, or DMRS 1 for short). This increases the throughput since only one single orthogonal frequency-division multiplexing (OFDM) symbol is needed to convey DMRS1. Further, DMRS could be sent in every uplink transmission from the terminal device 150.

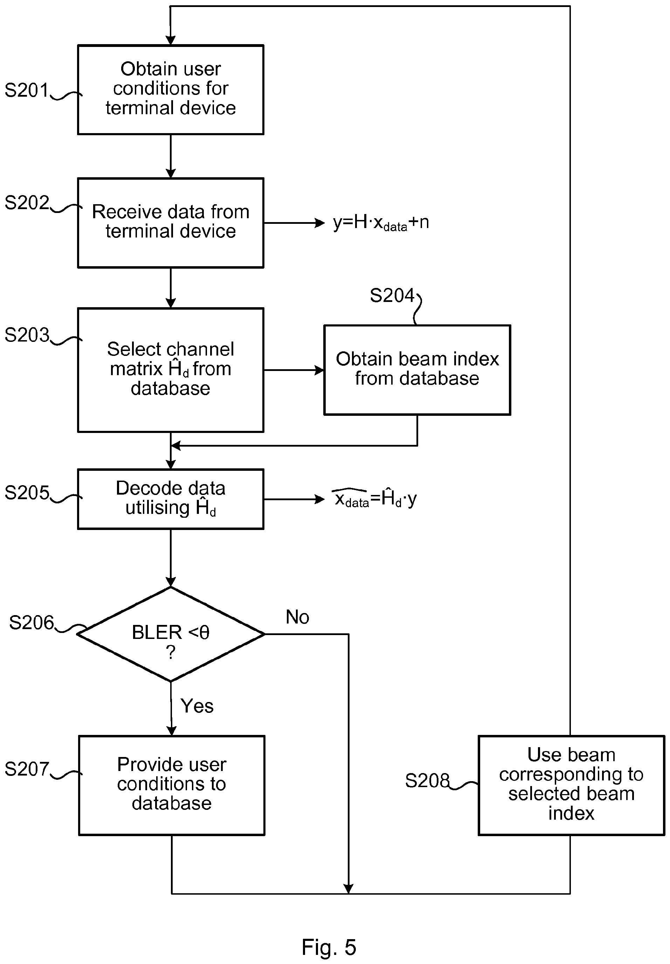

A first particular embodiment for decoding data received from the terminal device 150 as performed by the network node 200 will now be disclosed with reference to the flowchart of **Fig. 5.** S204, S206, S207, and S208 are optional.

S201: User conditions for the terminal device 150 are obtained. The user conditions at least comprise a rank indicator value and a measurement performed by the network node 200 on at least one reference signal received from the terminal device 150. Optionally, the set of user conditions further comprises at least one of: Doppler frequency of the terminal device 150 relative the network node 200 (or transmission and reception point 160), position of the terminal device 150 relative the network node 200 (or transmission and reception point 160), direction of travel of the terminal device 150 relative the network node 200 (or transmission and reception point 160), directivity of the terminal device 150 relative the network node 200 (or transmission and reception point 160), SINR for the terminal device 150, and a CQI for the terminal device 150.

S202: Data is received from the terminal device 150 in a current time slot. The user conditions are valid for this current time slot and hence valid for when the data is received. The received data is represented by a vector $y$, given as $y = H^* x_{data} + n$.

S203: A channel matrix, denoted $\hat{H}_d$, is selected from the database 140 comprising a set of offline trained channel matrices by the set of user conditions being provided as input to the database 140.

S204: A beam index is obtained from a set of beam indices comprised in the database 140 upon the set of user conditions having been provided as input to the database 140.

S205: The data is decoded using the selected channel matrix according to: $x^{\wedge}_{data} = \hat{H}_d * y$.

S206: A check is made whether the block error rate of the thus decoded received data is below a threshold value $\theta$. If so, S207 is entered.

S207: The set of user conditions is provided as input to offline training of the database 140.

S208: A beam given by the beam index obtained in S204 is used for the next time slot when communicating with the terminal device 150. S201 can then be entered again for the next time slot.

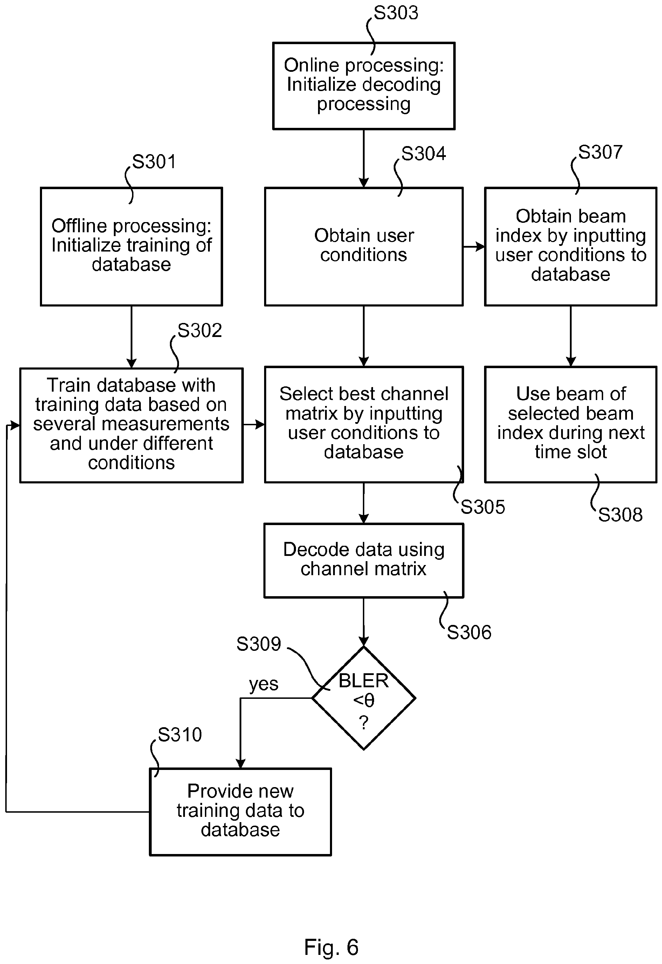

A second particular embodiment for decoding data received from the terminal device 150 will now be disclosed with reference to the flowchart of **Fig. 6.** All but S303-S306 are optional. Further, 5303-5309 are performed once per time slot.

S301: Offline training of the database 140 is initialized.

S302: The database 140, comprising a set of channel matrices (and optionally a set of beam indices), is trained with training data. The training data is based on several measurements as performed under different conditions (such as under laboratory conditions, in the field, using different channel models, etc., and under different user conditions (as listed under S305) for the terminal devices. The training results in an offline trained set of channel matrices (and optionally an offline trained set of beam indices).

S303: Online decoding of data is initialized.

S304: User conditions for the terminal device 150 are obtained. The user conditions at least comprise a rank indicator value and a measurement performed by the network node 200 on at least one reference signal received from the terminal device 150. Optionally, the set of user conditions further comprises at least one of: Doppler frequency of the terminal device 150 relative the network node 200 (or transmission and reception point 160), position of the terminal device 150 relative the network node 200 (or transmission and reception point 160), direction of travel of the terminal device 150 relative the network node 200 (or transmission and reception point 160), directivity of the terminal device 150 relative the network node 200, SINR for the terminal device 150, and a CQI for the terminal device 150.

S305: Data is received from the terminal device 150 in a current time slot. A channel matrix is selected from the database 140 by the set of user conditions being provided as input to the database 140. The user conditions as being inputted to the database 140 are valid for this current time slot and hence valid for when the data is received.

S306: The data is decoded using the selected channel matrix as disclosed above.

S307: A beam index is obtained from a set of beam indices comprised in the database 140 upon the set of user conditions having been provided as input to the database 140.

S308: A beam given by the beam index obtained in S307 is used for the next time slot when communicating with the terminal device 150.

S309: A check is made whether the block error rate of the thus decoded received data is below a threshold value $\theta$. If so, S310 is entered.

S310: The database 140 can then be updated offline by the user conditions being provided as new training data to the database 140.

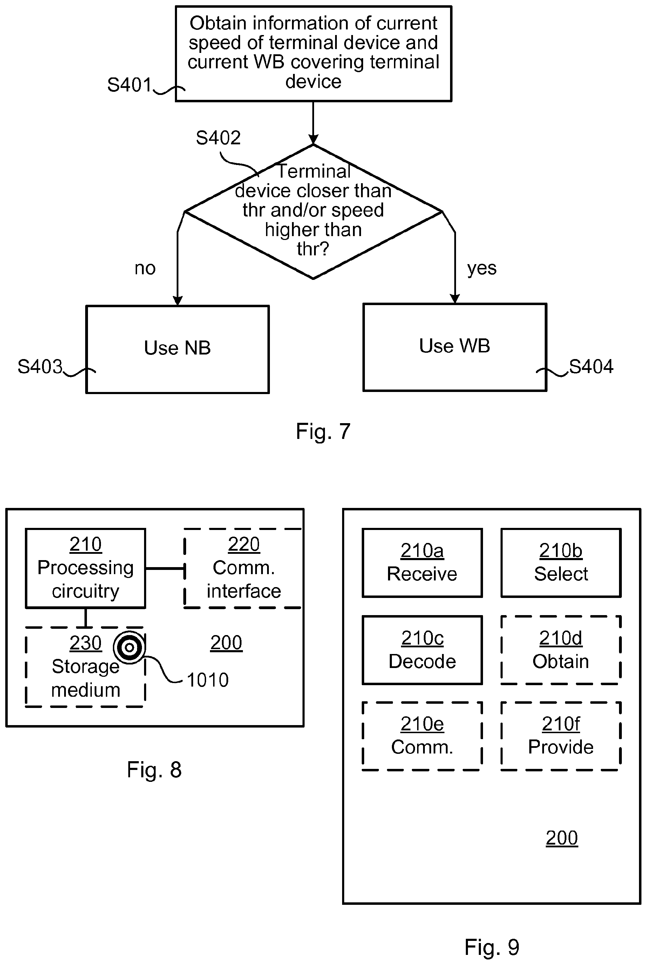

One particular embodiment for determining which beam (narrow beam; NB or wide beam; WB) will now be disclosed with reference to the flowchart of **Fig. 7.**

S401: Current speed of the terminal device 150 is obtained. Current distance between the terminal device 150 and the transmission and reception point 160 is obtained. Information of which wide beam (WB) is covering the terminal device 150 is obtained.

S402: A check is made as whether the terminal device 150 is closer in distance to the transmission and reception point 160 than a threshold distance and/or if the current speed is higher than a threshold speed.

If no, S403 is entered, else if no, S404 is entered.

S403: The beam to be used for the next time slot is either the narrow beam given by a separate (conventional) beam management procedure, or the narrow beam given by an index obtain from the database 140.

S404: The beam to be used for the next time slot is a wide beam given by an index obtain from the database 140.

**Fig. 8** schematically illustrates, in terms of a number of functional units, the components of a network node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1010 (as in Fig. 10), e.g. in the form of a storage medium 230. The processing circuitry 210 may further be provided as at least one application specific integrated circuit (ASIC), or field programmable gate array (FPGA).

Particularly, the processing circuitry 210 is configured to cause the network node 200 to perform a set of operations, or steps, as disclosed above. For example, the storage medium 230 may store the set of operations, and the processing circuitry 210 may be configured to retrieve the set of operations from the storage medium 230 to cause the network node 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The network node 200 may further comprise a communications interface 220 at least configured for communications with other entities, functions, nodes, and devices of the communication network 100. As such the communications interface 220 may comprise one or more transmitters and receivers, comprising analogue and digital components. The processing circuitry 210 controls the general operation of the network node 200 e.g. by sending data and control signals to the communications interface 220 and the storage medium 230, by receiving data and reports from the communications interface 220, and by retrieving data and instructions from the storage medium 230. Other components, as well as the related functionality, of the network node 200 are omitted in order not to obscure the concepts presented herein.

**Fig. 9** schematically illustrates, in terms of a number of functional modules, the components of a network node 200 according to an embodiment. The network node 200 of Fig. 9 comprises a number of functional modules; a receive module 210a configured to perform step S102, a select module 210b configured to perform step S 104, and a decode module 210c configured to perform step S106. The network node 200 of Fig. 9 may further comprise a number of optional functional modules, such as any of an obtain module 210d configured to perform step S108, a communicate module 210e configured to perform step S 110, and a provide module 210f configured to perform step S 112. In general terms, each functional module 210a-210f may in one embodiment be implemented only in hardware and in another embodiment with the help of software, i.e., the latter embodiment having computer program instructions stored on the storage medium 230 which when run on the processing circuitry makes the network node 200 perform the corresponding steps mentioned above in conjunction with Fig 9. It should also be mentioned that even though the modules correspond to parts of a computer program, they do not need to be separate modules therein, but the way in which they are implemented in software is dependent on the programming language used. Preferably, one or more or all functional modules 210a-210f may be implemented by the processing circuitry 210, possibly in cooperation with the communications interface 220 and/or the storage medium 230. The processing circuitry 210 may thus be configured to from the storage medium 230 fetch instructions as provided by a functional module 210a-210f and to execute these instructions, thereby performing any steps as disclosed herein.

The network node 200 may be provided as a standalone device or as a part of at least one further device. For example, the network node 200 may be provided in a node of the radio access network or in a node of the core network. Alternatively, functionality of the network node 200 may be distributed between at least two devices, or nodes. These at least two nodes, or devices, may either be part of the same network part (such as the radio access network or the core network) or may be spread between at least two such network parts. In general terms, instructions that are required to be performed in real time may be performed in a device, or node, operatively closer to the cell than instructions that are not required to be performed in real time. Thus, a first portion of the instructions performed by the network node 200 may be executed in a first device, and a second portion of the of the instructions performed by the network node 200 may be executed in a second device; the herein disclosed embodiments are not limited to any particular number of devices on which the instructions performed by the network node 200 may be executed. Hence, the methods according to the herein disclosed embodiments are suitable to be performed by a network node 200 residing in a cloud computational environment. Therefore, although a single processing circuitry 210 is illustrated in Fig. 8 the processing circuitry 210 may be distributed among a plurality of devices, or nodes. The same applies to the functional modules 210a-210f of Fig. 9 and the computer program 1020 of Fig. 10.

Fig. 10 shows one example of a computer program product 1010 comprising computer readable storage medium 1030. On this computer readable storage medium 1030, a computer program 1020 can be stored, which computer program 1020 can cause the processing circuitry 210 and thereto operatively coupled entities and devices, such as the communications interface 220 and the storage medium 230, to execute methods according to embodiments described herein. The computer program 1020 and/or computer program product 1010 may thus provide means for performing any steps as herein disclosed.

In the example of Fig. 10, the computer program product 1010 is illustrated as an optical disc, such as a CD (compact disc) or a DVD (digital versatile disc) or a Blu-Ray disc. The computer program product 1010 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1020 is here schematically shown as a track on the depicted optical disk, the computer program 1020 can be stored in any way which is suitable for the computer program product 1010.

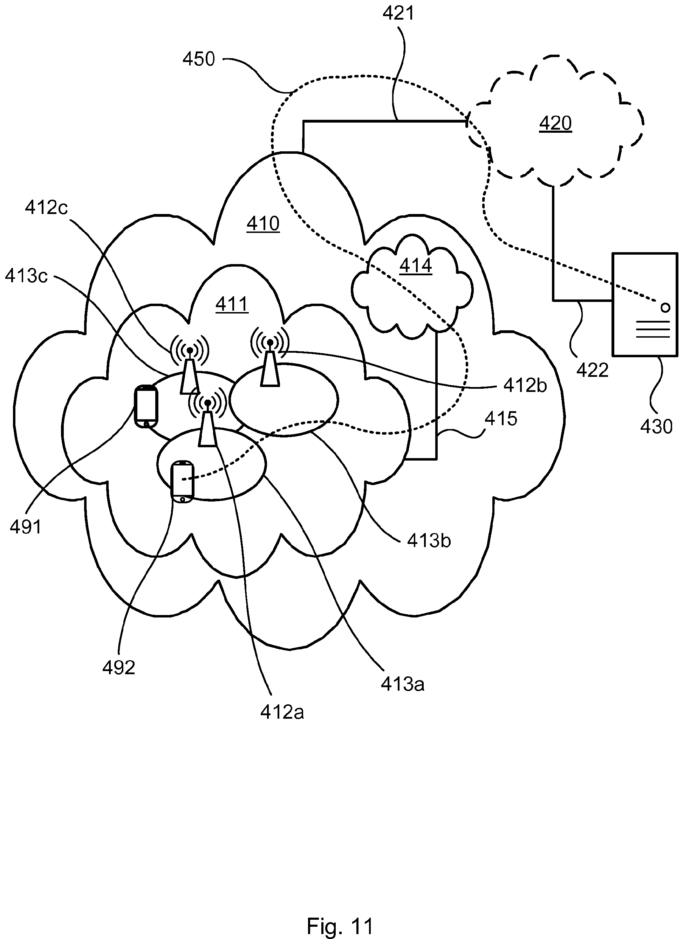

**Fig. 11** is a schematic diagram illustrating a telecommunication network connected via an intermediate network 420 to a host computer 430 in accordance with some embodiments. In accordance with an embodiment, a communication system includes telecommunication network 410, such as a 3GPP-type cellular network, which comprises access network 411, such as radio access network 110 in Fig. 1, and core network 414, such as core network 120 in Fig. 1. Access network 411 comprises a plurality of radio access network nodes 412a, 412b, 412c, such as NBs, eNBs, gNBs (each corresponding to the network node 200 of Fig. 1) or other types of wireless access points, each defining a corresponding coverage area, or cell, 413a, 413b, 413c. Each radio access network nodes 412a, 412b, 412c is connectable to core network 414 over a wired or wireless connection 415. A first UE 491 located in coverage area 413c is configured to wirelessly connect to, or be paged by, the corresponding network node 412c. A second UE 492 in coverage area 413a is wirelessly connectable to the corresponding network node 412a. While a plurality of UE 491, 492 are illustrated in this example, the disclosed embodiments are equally applicable to a situation where a sole UE is in the coverage area or where a sole terminal device is connecting to the corresponding network node 412. The UEs 491, 492 correspond to the terminal device 150 of Fig. 1.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of Fig. 11 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, network node 412 may not or need not be informed about the past routing of an incoming downlink communication with data originating from host computer 430 to be forwarded (e.g., handed over) to a connected UE 491. Similarly, network node 412 need not be aware of the future routing of an outgoing uplink communication originating from the UE 491 towards the host computer 430.

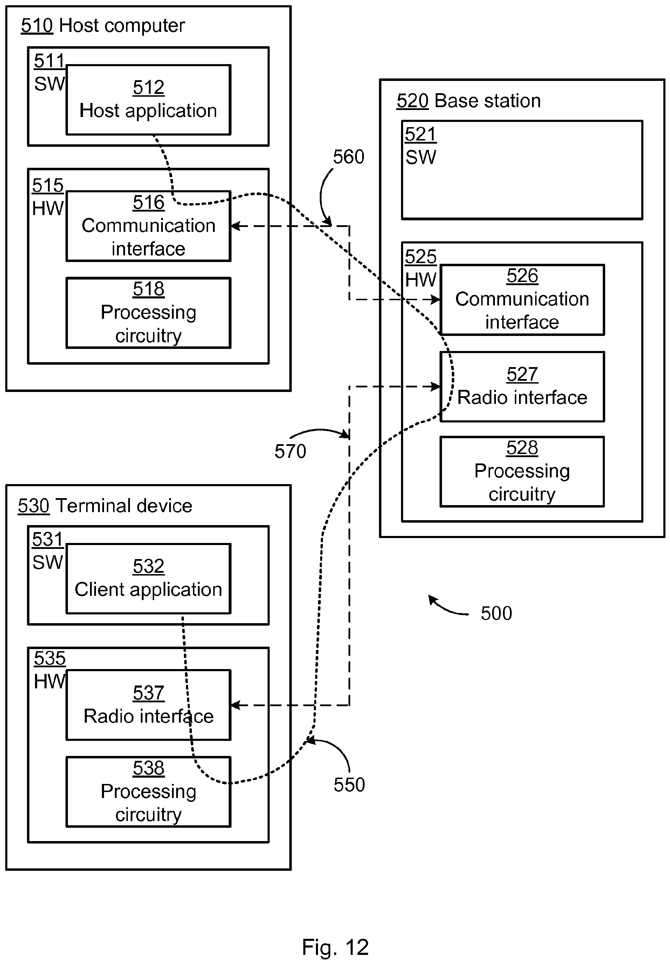

**Fig. 12** is a schematic diagram illustrating host computer communicating via a radio access network node with a UE over a partially wireless connection in accordance with some embodiments. Example implementations, in accordance with an embodiment, of the UE, radio access network node and host computer discussed in the preceding paragraphs will now be described with reference to Fig. 12. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. The UE 530 corresponds to the terminal device 150 of Fig. 1. In providing the service to the remote user, host application 512 may provide user data which is transmitted using OTT connection 550.

Communication system 500 further includes radio access network node 520 provided in a telecommunication system and comprising hardware 525 enabling it to communicate with host computer 510 and with UE 530. The radio access network node 520 corresponds to the network node 200 of Fig. 1. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Fig. 12) served by radio access network node 520. Communication interface 526 may be configured to facilitate connection 560 to host computer 510. Connection 560 may be direct or it may pass through a core network (not shown in Fig. 12) of the telecommunication system and/or through one or more intermediate networks outside the telecommunication system. In the embodiment shown, hardware 525 of radio access network node 520 further includes processing circuitry 528, which may comprise one or more programmable processors, application-specific integrated circuits, field programmable gate arrays or combinations of these (not shown) adapted to execute instructions. Radio access network node 520 further has software 521 stored internally or accessible via an external connection.

Communication system 500 further includes UE 530 already referred to. Its hardware 535 may include radio interface 537 configured to set up and maintain wireless connection 570 with a radio access network node serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, radio access network node 520 and UE 530 illustrated in Fig. 12 may be similar or identical to host computer 430, one of network nodes 412a, 412b, 412c and one of UEs 491, 492 of Fig. 11, respectively. This is to say, the inner workings of these entities may be as shown in Fig. 12 and independently, the surrounding network topology may be that of Fig. 11.

In Fig. 12, OTT connection 550 has been drawn abstractly to illustrate the communication between host computer 510 and UE 530 via network node 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and radio access network node 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may reduce interference, due to improved classification ability of airborne UEs which can generate significant interference.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect network node 520, and it may be unknown or imperceptible to radio access network node 520. Such procedures and functionalities may be known and practiced in the art. In certain embodiments, measurements may involve proprietary UE signaling facilitating host computer's 510 measurements of throughput, propagation times, latency and the like. The measurements may be implemented in that software 511 and 531 causes messages to be transmitted, in particular empty or 'dummy' messages, using OTT connection 550 while it monitors propagation times, errors etc.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for decoding data received from a terminal device (150), the method being performed by a network node (200), the method comprising:

   receiving (S102) data, from the terminal device (150), during a set of user conditions prevailing for the terminal device (150), the set of user conditions comprising

   - a rank indicator value reported by the terminal device (150) and
   - a measurement performed by the network node (200) on at least one reference signal received from the terminal device (150);

   selecting (S104), by providing the set of user conditions as input to a database (140), a channel matrix from the database (140), the database (140) comprising a set of offline trained channel matrices; and
   decoding (5106) the received data for the terminal device (150) using the selected channel matrix.

2. The method according to claim 1, wherein the set of user conditions further comprises at least one of: Doppler frequency of the terminal device (150) relative the network node (200), position of the terminal device (150) relative the network node (200), direction of travel of the terminal device (150) relative the network node (200), directivity of the terminal device (150) relative the network node (200), signal to interference plus noise ratio, SINR, for the terminal device (150), and channel quality indicator, CQI, for the terminal device (150).

3. The method according to any of the preceding claims, wherein providing the set of user conditions as input to the database (140) comprises classifying the set of user conditions to an index, the index being selected from a set of indices wherein each index is associated with a set of known user conditions, the selected index being the one associated with a set of known user conditions best matching the set of user conditions, wherein the index is provided as input to the database (140), and wherein the selected channel matrix matches the thus inputted index in the database (140).

4. The method according to any of the preceding claims, wherein the data is received in a current time slot, and wherein the database (140) further comprises a set of beam indices, the method further comprising:

> obtaining (S108) from the database (140), upon having provided the set of user conditions as input to the database (140), a beam index from the set of beam indices; and
> communicating (S 110), using a beam given by the beam index, with the terminal device (150) during a time slot adjoining the current time slot.

5. The method according to claim 4, wherein providing the set of user conditions as input to the database (140) comprises classifying the set of user conditions to an index, the index being selected from a set of indices as the one best matching the set of user conditions, wherein the index is provided as input to the database (140), and wherein the obtained beam index matches the thus inputted index in the database (140).

6. The method according to claim 4 or 5, wherein a separate beam management procedure also is performed by the network node (200) for determining which beam to use for the adjoining time slot, wherein the set of user conditions defines a time window within which the beam to use for the adjoining time slot must be determined, and wherein the beam given by the beam index only is used when the separate beam management procedure fails to be completed within the time window.

7. The method according to any of the preceding claims, further comprising:
providing (S 112) the set of user conditions as input to offline training of the database (140) only when the block error rate of the thus decoded received data is below a threshold value.

8. The method according to claim 7, wherein the offline training of the database (140) pertains to which inputted index to be mapped to which channel matrix in the set of offline channel matrices, and/or which channel matrices to be included in the set of offline channel matrices.

9. A network node (200) for decoding data received from a terminal device (150), the network node (200) comprising processing circuitry (210), the processing circuitry being configured to cause the network node (200) to:

> receive data, from the terminal device (150), during a set of user conditions prevailing for the terminal device (150), the set of user conditions comprising
>
> > - a rank indicator value reported by the terminal device (150) and
> > - a measurement performed by the network node (200) on at least one reference signal received from the terminal device (150);
>
> select, by providing the set of user conditions as input to a database (140), a channel matrix from the database (140), the database (140) comprising a set of offline trained channel matrices; and decode the received data for the terminal device (150) using the selected channel matrix.

10. The network node (200) according to claim 9, wherein the set of user conditions further comprises at least one of: Doppler frequency of the terminal device (150) relative the network node (200), position of the terminal device (150) relative the network node (200), direction of travel of the terminal device (150) relative the network node (200), directivity of the terminal device (150) relative the network node (200), signal to interference plus noise ratio, SINR, for the terminal device (150), and channel quality indicator, CQI, for the terminal device (150).

11. The network node (200) according to any of claims 9 to 10, wherein the network node (200) is configured to provide the set of user conditions as input to the database (140) by classifying the set of user conditions to an index, the index being selected from a set of indices wherein each index is associated with a set of known user conditions, the selected index being the one associated with a set of known user conditions best matching the set of user conditions, wherein the index is provided as input to the database (140), and wherein the selected channel matrix matches the thus inputted index in the database (140).

12. The network node (200) according to any of claims 9 to 11, wherein the data is received in a current time slot, and wherein the database (140) further comprises a set of beam indices, the network node (200) further being configured to:

    obtain from the database (140), upon having provided the set of user conditions as input to the database (140), a beam index from the set of beam indices; and
    communicate, using a beam given by the beam index, with the terminal device (150) during a time slot adjoining the current time slot.

13. The network node (200) according to claim 12, wherein providing the set of user conditions as input to the database (140) comprises classifying the set of user conditions to an index, the index being selected from a set of indices as the one best matching the set of user conditions, wherein the index is provided as input to the database (140), and wherein the obtained beam index matches the thus inputted index in the database (140).

14. The network node (200) according to claim 12 or 13, wherein a separate beam management procedure also is performed by the network node (200) for determining which beam to use for the adjoining time slot, wherein the set of user conditions defines a time window within which the beam to use for the adjoining time slot must be determined, and wherein the beam given by the beam index only is used when the separate beam management procedure fails to be completed within the time window.

15. The network node (200) according to any of claims 9 to 14, further being configured to:
    provide the set of user conditions as input to offline training of the database (140) only when the block error rate of the thus decoded received data is below a threshold value.

16. The network node (200) according to claim 15, wherein the offline training of the database (140) pertains to which inputted index to be mapped to which channel matrix in the set of offline channel matrices, and/or which channel matrices to be included in the set of offline channel matrices.

17. A computer program (1020) for decoding data received from a terminal device (150), the computer program comprising computer code which, when run on processing circuitry (210) of a network node (200), causes the network node (200) to:

    receive (S102) data, from the terminal device (150), during a set of user conditions prevailing for the terminal device (150), the set of user conditions comprising

        - a rank indicator value reported by the terminal device (150) and
        - a measurement performed by the network node (200) on at least one reference signal received from the terminal device (150);

    select (S 104), by providing the set of user conditions as input to a database (140), a channel matrix from the database (140), the database (140) comprising a set of offline trained channel matrices; and
    decode (S106) the received data for the terminal device (150) using the selected channel matrix.

**Patentansprüche**

1. Verfahren zum Decodieren von Daten, die von einer Endgerätvorrichtung (150) empfangen werden, wobei das Verfahren durch einen Netzknoten (200) durchgeführt wird und wobei das Verfahren Folgendes umfasst:

    Empfangen (S102) von Daten von der Endgerätvorrichtung (150) während ein Satz von Benutzerbedingungen für die Endgerätvorrichtung (150) vorherrscht, der Satz von Benutzerbedingungen umfassend

        - einen Rangindikatorwert, der durch die Endgerätvorrichtung (150) gemeldet wird, und
        - eine Messung, die durch den Netzknoten (200) an mindestens einem Referenzsignal durchgeführt wird, das von der Endgerätvorrichtung (150) empfangen wird;

    Auswählen (S104), durch Bereitstellen des Satzes von Benutzerbedingungen als Eingabe in eine Datenbank (140), einer Kanalmatrix aus der Datenbank (140), wobei die Datenbank (140) einen Satz von offline trainierten Kanalmatrizen umfasst; und
    Decodieren (S106) der empfangenen Daten für die Endgerätvorrichtung (150) unter Verwendung der ausgewählten Kanalmatrix.

2. Verfahren nach Anspruch 1, wobei der Satz von Benutzerbedingungen ferner mindestens eines des Folgenden umfasst: eine Doppler-Frequenz der Endgerätvorrichtung (150) relativ zu dem Netzknoten (200), eine Position der Endgerätvorrichtung (150) relativ zu dem Netzknoten (200), eine Bewegungsrichtung der Endgerätvorrichtung (150) relativ zu dem Netzknoten (200), eine Direktivität der Endgerätvorrichtung (150) relativ zu dem Netzknoten (200), ein Signal-zu-Interferenz-plus-Rauschen-Verhältnis, SINR, für die Endgerätvorrichtung (150) und einen Kanalqualitätsindikator, CQI, für die Endgerätvorrichtung (150).

3. Verfahren nach einem der vorhergehenden Ansprüche, wobei das Bereitstellen des Satzes von Benutzerbedingungen als Eingabe in die Datenbank (140) Klassifizieren des Satzes von Benutzerbedingungen auf einen Index umfasst, wobei der Index aus einem Satz von Indizes ausgewählt wird und wobei jeder Index mit einem Satz von bekannten Benutzerbedingungen assoziiert ist, wobei der ausgewählte Index derjenige ist, der mit einem Satz von bekannten Benutzerbedingungen assoziiert ist, der am besten mit dem Satz von Benutzerbedingungen übereinstimmt, wobei der Index als Eingabe in die Datenbank (140) bereitgestellt wird und wobei die ausgewählte Kanalmatrix mit dem so in die Datenbank (140) eingegebenen Index übereinstimmt.

4. Verfahren nach einem der vorhergehenden Ansprüche, wobei die Daten in einem aktuellen Zeitschlitz empfangen werden und wobei die Datenbank (140) ferner einen Satz von Strahlenindizes umfasst, wobei das Verfahren ferner Folgendes umfasst:

   Erhalten (S108) von der Datenbank (140), nachdem der Datenbank (140) der Satz von Benutzerbedingungen als Eingabe bereitgestellt wurde, eines Strahlenindexes aus dem Satz von Strahlenindizes; und
   Kommunizieren (S110), unter Verwendung eines durch den Strahlenindex gegebenen Strahl, mit der Endgerätvorrichtung (150) während eines Zeitschlitzes, der an den aktuellen Zeitschlitz angrenzt.

5. Verfahren nach Anspruch 4, wobei das Bereitstellen des Satzes von Benutzerbedingungen als Eingabe in die Datenbank (140) Klassifizieren des Satzes von Benutzerbedingungen auf einen Index umfasst, wobei der Index aus einem Satz von Indizes als derjenige ausgewählt wird, der am besten mit dem Satz von Benutzerbedingungen übereinstimmt, wobei der Index der Datenbank (140) als Eingabe bereitgestellt wird und wobei der erhaltene Strahlenindex mit dem so in die Datenbank (140) eingegebenen Index übereinstimmt.

6. Verfahren nach Anspruch 4 oder 5, wobei durch den Netzknoten (200) zudem eine getrennte Strahlenverwaltungsprozedur durchgeführt wird, um zu bestimmen, welcher Strahl für den angrenzenden Zeitschlitz zu verwenden ist, wobei der Satz von Benutzerbedingungen ein Zeitfenster definiert, innerhalb welchem der für den angrenzenden Zeitschlitz zu verwendende Strahl bestimmt werden muss, und wobei der durch den Strahlenindex gegebene Strahl nur verwendet wird, wenn die getrennte Strahlenverwaltungsprozedur nicht innerhalb des Zeitfensters abgeschlossen wird.

7. Verfahren nach einem der vorhergehenden Ansprüche, das ferner Folgendes umfasst:
   Bereitstellen (S112) des Satzes von Benutzerbedingungen als Eingabe zum Offline-Training der Datenbank (140) nur dann, wenn die Blockfehlerrate der so decodierten empfangenen Daten unter einem Schwellenwert liegt.

8. Verfahren nach Anspruch 7, wobei das Offline-Training der Datenbank (140) sich darauf bezieht, welcher eingegebene Index welcher Kanalmatrix in dem Satz von Offline-Kanalmatrizen zuzuordnen ist und/oder welche Kanalmatrizen in den Satz von Offline-Kanalmatrizen einzubeziehen sind.

9. Netzknoten (200) zum Decodieren von Daten, die von einer Endgerätvorrichtung (150) empfangen werden, wobei der Netzknoten (200) eine Verarbeitungsschaltung (210) umfasst, wobei die Verarbeitungsschaltung dazu konfiguriert ist, den Netzknoten (200) zu Folgendem zu veranlassen:

   Empfangen von Daten von der Endgerätvorrichtung (150) während ein Satz von Benutzerbedingungen für die Endgerätvorrichtung (150) vorherrscht, der Satz von Benutzerbedingungen umfassend

      - einen Rangindikatorwert, der durch die Endgerätvorrichtung (150) gemeldet wird, und
      - eine Messung, die durch den Netzknoten (200) an mindestens einem Referenzsignal durchgeführt wird, das von der Endgerätvorrichtung (150) empfangen wird;

   Auswählen, durch Bereitstellen des Satzes von Benutzerbedingungen als Eingabe in eine Datenbank (140), einer Kanalmatrix aus der Datenbank (140), wobei die Datenbank (140) einen Satz von offline trainierten Kanalmatrizen umfasst; und

Decodieren der empfangenen Daten für die Endgerätvorrichtung (150) unter Verwendung der ausgewählten Kanalmatrix.

10. Netzknoten (200) nach Anspruch 9, wobei der Satz von Benutzerbedingungen mindestens eines des Folgenden umfasst: eine Doppler-Frequenz der Endgerätvorrichtung (150) relativ zu dem Netzknoten (200), eine Position der Endgerätvorrichtung (150) relativ zu dem Netzknoten (200), eine Bewegungsrichtung der Endgerätvorrichtung (150) relativ zu dem Netzknoten (200), eine Direktivität der Endgerätvorrichtung (150) relativ zu dem Netzknoten (200), ein Signal-zu-Interferenz-plus-Rauschen-Verhältnis, SINR, für die Endgerätvorrichtung (150) und einen Kanalqualitätsindikator, CQI, für die Endgerätvorrichtung (150) .

11. Netzknoten (200) nach einem der Ansprüche 9 bis 10, wobei der Netzknoten (200) dazu konfiguriert ist, der Datenbank (140) den Satz von Benutzerbedingungen als Eingabe durch Klassifizieren des Satzes von Benutzerbedingungen auf einen Index bereitzustellen, wobei der Index aus einem Satz von Indizes ausgewählt wird und wobei jeder Index mit einem Satz von bekannten Benutzerbedingen assoziiert ist, wobei der ausgewählte Index derjenige ist, der mit einem Satz von bekannten Benutzerbedingungen assoziiert ist, der am besten mit dem Satz von Benutzerbedingungen übereinstimmt, wobei der Index als Eingabe in die Datenbank (140) bereitgestellt wird und wobei die ausgewählte Kanalmatrix mit dem so in die Datenbank (140) eingegebenen Index übereinstimmt.

12. Netzknoten (200) nach einem der Ansprüche 9 bis 11, wobei die Daten in einem aktuellen Zeitschlitz empfangen werden und wobei die Datenbank (140) ferner einen Satz von Strahlenindizes umfasst, wobei der Netzknoten (200) ferner zu Folgendem konfiguriert ist:

Erhalten von der Datenbank (140), nachdem der Datenbank (140) der Satz von Benutzerbedingungen als Eingabe bereitgestellt wurde, eines Strahlenindexes aus dem Satz von Strahlenindizes; und
Kommunizieren, unter Verwendung eines durch den Strahlenindex gegebenen Strahl, mit der Endgerätvorrichtung (150) während eines Zeitschlitzes, der an den aktuellen Zeitschlitz angrenzt.

13. Netzknoten (200) nach Anspruch 12, wobei das Bereitstellen des Satzes von Benutzerbedingungen als Eingabe in die Datenbank (140) Klassifizieren des Satzes von Benutzerbedingungen auf einen Index umfasst, wobei der Index aus einem Satz von Indizes als derjenige ausgewählt wird, der am besten mit dem Satz von Benutzerbedingungen übereinstimmt, wobei der Index der Datenbank (140) als Eingabe bereitgestellt wird und wobei der erhaltene Strahlenindex mit dem so in die Datenbank (140) eingegebenen Index übereinstimmt.

14. Netzknoten (200) nach Anspruch 12 oder 13, wobei durch den Netzknoten (200) zudem eine getrennte Strahlenverwaltungsprozedur durchgeführt wird, um zu bestimmen, welcher Strahl für den angrenzenden Zeitschlitz zu verwenden ist, wobei der Satz von Benutzerbedingungen ein Zeitfenster definiert, innerhalb welchem der für den angrenzenden Zeitschlitz zu verwendende Strahl bestimmt werden muss, und wobei der durch den Strahlenindex gegebene Strahl nur verwendet wird, wenn die getrennte Strahlenverwaltungsprozedur nicht innerhalb des Zeitfensters abgeschlossen wird.

15. Netzknoten (200) nach einem der Ansprüche 9 bis 14, der ferner zu Folgendem konfiguriert ist:
Bereitstellen des Satzes von Benutzerbedingungen als Eingabe zum Offline-Training der Datenbank (140) nur dann, wenn die Blockfehlerrate der so decodierten empfangenen Daten unter einem Schwellenwert liegt.

16. Netzknoten (200) nach Anspruch 15, wobei das Offline-Training der Datenbank (140) sich darauf bezieht, welcher eingegebene Index welcher Kanalmatrix in dem Satz von Offline-Kanalmatrizen zuzuordnen ist und/oder welche Kanalmatrizen in den Satz von Offline-Kanalmatrizen einzubeziehen sind.

17. Computerprogramm (1020) zum Decodieren von Daten, die von einer Endgerätvorrichtung (150) empfangen werden, wobei das Computerprogramm Computercode umfasst, das, wenn es auf einer Verarbeitungsschaltung (210) eines Netzkotens (200) läuft, den Netzknoten (200) zu Folgendem veranlasst:

Empfangen (S102) von Daten von der Endgerätvorrichtung (150) während ein Satz von Benutzerbedingungen für die Endgerätvorrichtung (150) vorherrscht, der Satz von Benutzerbedingungen umfassend

- einen Rangindikatorwert, der durch die Endgerätvorrichtung (150) gemeldet wird, und
- eine Messung, die durch den Netzknoten (200) an mindestens einem Referenzsignal durchgeführt wird, das von der Endgerätvorrichtung (150) empfangen wird;

Auswählen (S104), durch Bereitstellen des Satzes von Benutzerbedingungen als Eingabe in eine Datenbank (140), einer Kanalmatrix aus der Datenbank (140), wobei die Datenbank (140) einen Satz von offline trainierten Kanalmatrizen umfasst; und

Decodieren (S106) der empfangenen Daten für die Endgerätvorrichtung (150) unter Verwendung der ausgewählten Kanalmatrix.

**Revendications**

1. Procédé de décodage de données reçues en provenance d'un dispositif terminal (150), le procédé étant réalisé par un nœud de réseau (200), le procédé comprenant :

la réception (S102) de données, en provenance du dispositif terminal (150), pendant un ensemble de conditions d'utilisateur prévalant pour le dispositif terminal (150), l'ensemble de conditions d'utilisateur comprenant

- une valeur d'indicateur de rang rapportée par le dispositif terminal (150) et
- une mesure réalisée par le nœud de réseau (200) sur au moins un signal de référence reçu en provenance du dispositif terminal (150) ;

la sélection (S104), par la fourniture de l'ensemble de conditions d'utilisateur en tant qu'entrée dans une base de données (140), d'une matrice de canal à partir de la base de données (140), la base de données (140) comprenant un ensemble de matrices de canal entraînées hors ligne ; et
le décodage (S106) des données reçues pour le dispositif terminal (150) à l'aide de la matrice de canal sélectionnée.

2. Procédé selon la revendication 1, dans lequel l'ensemble de conditions d'utilisateur comprend également au moins l'un parmi: une fréquence Doppler du dispositif terminal (150) par rapport au nœud de réseau (200), une position du dispositif terminal (150) par rapport au nœud de réseau (200), une direction de déplacement du dispositif terminal (150) par rapport au nœud de réseau (200), une directivité du dispositif terminal (150) par rapport au nœud de réseau (200), un rapport signal/interférence plus bruit, SINR, pour le dispositif terminal (150), et un indicateur de qualité de canal, CQI, pour le dispositif terminal (150).

3. Procédé selon l'une quelconque des revendications précédentes, dans lequel la fourniture de l'ensemble de conditions d'utilisateur en tant qu'entrée dans la base de données (140) comprend la classification de l'ensemble de conditions d'utilisateur dans un indice, l'indice étant sélectionné parmi un ensemble d'indices, dans lequel chaque indice est associé à un ensemble de conditions d'utilisateur connues, l'indice sélectionné étant celui associé à un ensemble de conditions d'utilisateur connues correspondant le mieux à l'ensemble de conditions d'utilisateur, dans lequel l'indice est fourni en tant qu'entrée dans la base de données (140), et dans lequel la matrice de canal sélectionnée correspond à l'indice ainsi entré dans la base de données (140).

4. Procédé selon l'une quelconque des revendications précédentes, dans lequel les données sont reçues dans un créneau temporel courant, et dans lequel la base de données (140) comprend également un ensemble d'indices de faisceaux, le procédé comprenant également :

l'obtention (S108), à partir de la base de données (140), après avoir fourni l'ensemble de conditions d'utilisateur en tant qu'entrée dans la base de données (140), d'un indice de faisceau à partir de l'ensemble d'indices de faisceau ; et
la communication (S110), à l'aide d'un faisceau donné par l'indice de faisceau, avec le dispositif terminal (150) pendant un créneau horaire adjacent à l'intervalle de temps actuel.

5. Procédé selon la revendication 4, dans lequel la fourniture de l'ensemble de conditions d'utilisateur en tant qu'entrée dans la base de données (140) comprend la classification de l'ensemble de conditions d'utilisateur dans un indice, l'indice étant sélectionné parmi un ensemble d'indices comme celui correspondant le mieux à l'ensemble des conditions d'utilisateur, dans lequel l'indice est fourni comme entrée dans la base de données (140), et dans lequel l'indice de faisceau obtenu correspond à l'indice ainsi entré dans la base de données (140).

6. Procédé selon la revendication 4 ou 5, dans lequel une procédure de gestion de faisceau séparée est également réalisée par le nœud de réseau (200) pour déterminer quel faisceau utiliser pour la tranche horaire adjacente, dans lequel l'ensemble de conditions d'utilisateur définit une fenêtre temporelle dans laquelle le faisceau à utiliser pour la tranche de temps adjacente doit être déterminé, et dans lequel le faisceau donné par l'indice de faisceau uniquement est utilisé lorsque la procédure de gestion de faisceau séparée ne parvient pas à être achevée dans la fenêtre de temps.

7. Procédé selon l'une quelconque des revendications précédentes, comprenant également :
la fourniture (S112) de l'ensemble de conditions d'utilisateur comme entrée pour l'apprentissage hors ligne de la base de données (140) uniquement lorsque le taux d'erreur de bloc des données reçues ainsi décodées est inférieur à une valeur seuil.

8. Procédé selon la revendication 7, dans lequel l'apprentissage hors ligne de la base de données (140) concerne quel indice entré doit être mis en correspondance sur quelle matrice de canal dans l'ensemble de matrices de canal hors ligne, et/ou quelles matrices de canal doivent être comprises dans l'ensemble de matrices de canal hors ligne.

9. Noeud de réseau (200) pour décoder des données reçues en provenance d'un dispositif terminal (150), le noeud de réseau (200) comprenant des circuits de traitement (210), les circuits de traitement étant configurés pour amener le noeud de réseau (200) à :

   recevoir des données, en provenance du dispositif terminal (150), pendant un ensemble de conditions d'utilisateur prévalant pour le dispositif terminal (150), l'ensemble de conditions d'utilisateur comprenant

   - une valeur d'indicateur de rang rapportée par le dispositif terminal (150) et
   - une mesure réalisée par le noeud de réseau (200) sur au moins un signal de référence reçu en provenance du dispositif terminal (150) ;

   sélectionner, en fournissant l'ensemble de conditions d'utilisateur en tant qu'entrée dans une base de données (140), une matrice de canal à partir de la base de données (140), la base de données (140) comprenant un ensemble de matrices de canal entraînées hors ligne ; et
   décoder les données reçues pour le dispositif terminal (150) à l'aide de la matrice de canal sélectionnée.

10. Noeud de réseau (200) selon la revendication 9, dans lequel l'ensemble de conditions d'utilisateur comprend également au moins l'un parmi : une fréquence Doppler du dispositif terminal (150) par rapport au noeud de réseau (200), une position du dispositif terminal (150) par rapport au noeud de réseau (200), une direction de déplacement du dispositif terminal (150) par rapport au noeud de réseau (200), une directivité du dispositif terminal (150) par rapport au noeud de réseau (200), un rapport signal/interférence plus bruit, SINR, pour le dispositif terminal (150), et un indicateur de qualité de canal, CQI, pour le dispositif terminal (150).

11. Noeud de réseau (200) selon l'une quelconque des revendications 9 à 10, dans lequel le noeud de réseau (200) est configuré pour fournir l'ensemble de conditions d'utilisateur en tant qu'entrée dans la base de données (140) en classifiant l'ensemble de conditions d'utilisateur dans un indice, l'indice étant sélectionné parmi un ensemble d'indices dans lequel chaque indice est associé à un ensemble de conditions d'utilisateur connues, l'indice sélectionné étant celui associé à un ensemble de conditions d'utilisateur connues correspondant le mieux à l'ensemble de conditions d'utilisateur, dans lequel l'indice est fourni comme entrée dans la base de données (140), et dans lequel la matrice de canal sélectionnée correspond à l'indice ainsi entré dans la base de données (140).

12. Noeud de réseau (200) selon l'une quelconque des revendications 9 à 11, dans lequel les données sont reçues dans un créneau temporel actuel, et dans lequel la base de données (140) comprend également un ensemble d'indices de faisceau, le noeud de réseau (200) étant également configuré pour :

    obtenir, à partir de la base de données (140), après avoir fourni l'ensemble de conditions d'utilisateur en tant qu'entrée dans la base de données (140), un indice de faisceau à partir de l'ensemble d'indices de faisceau ; et
    communiquer, à l'aide d'un faisceau donné par l'indice de faisceau, avec le dispositif terminal (150) pendant un créneau horaire adjacent à l'intervalle de temps actuel.

13. Noeud de réseau (200) selon la revendication 12, dans lequel la fourniture de l'ensemble de conditions d'utilisateur en tant qu'entrée dans la base de données (140) comprend la classification de l'ensemble de conditions d'utilisateur dans un indice, l'indice étant sélectionné parmi un ensemble d'indices comme l'un correspondant le mieux à l'ensemble des conditions d'utilisateur, l'indice étant fourni en tant qu'entrée dans la base de données (140), et dans lequel l'indice de faisceau obtenu correspond à l'indice ainsi entré dans la base de données (140).

14. Noeud de réseau (200) selon la revendication 12 ou 13, dans lequel une procédure de gestion de faisceau distincte est également réalisée par le noeud de réseau (200) pour déterminer quel faisceau utiliser pour la tranche horaire adjacente, dans lequel l'ensemble de conditions d'utilisateur définit une fenêtre temporelle dans laquelle le faisceau à utiliser pour la tranche horaire adjacente doit être déterminée, et dans laquelle le faisceau donné par l'indice de faisceau uniquement est utilisé lorsque la procédure de gestion de faisceau séparée ne parvient pas à être achevée dans la fenêtre temporelle.

15. Noeud de réseau (200) selon l'une quelconque des revendications 9 à 14, étant également configuré pour :

fournir l'ensemble de conditions d'utilisateur comme entrée pour l'apprentissage hors ligne de la base de données (140) uniquement lorsque le taux d'erreur de bloc des données reçues ainsi décodées est inférieur à une valeur seuil.

16. Noeud de réseau (200) selon la revendication 15, dans lequel l'apprentissage hors ligne de la base de données (140) concerne quel indice entré doit être mis en correspondance sur quelle matrice de canal dans l'ensemble de matrices de canal hors ligne, et/ou quelles matrices de canal doivent être comprises dans l'ensemble de matrices de canal hors ligne.

17. Programme informatique (1020) pour décoder des données reçues en provenance d'un dispositif terminal (150), le programme informatique comprenant un code informatique qui, lorsqu'il est exécuté sur des circuits de traitement (210) d'un noeud de réseau (200), amène le noeud de réseau (200) à :

recevoir (S102) des données, en provenance du dispositif terminal (150), pendant un ensemble de conditions d'utilisateur prévalant pour le dispositif terminal (150), l'ensemble de conditions d'utilisateur comprenant

- une valeur d'indicateur de rang rapportée par le dispositif terminal (150) et
- une mesure réalisée par le noeud de réseau (200) sur au moins un signal de référence reçu en provenance du dispositif terminal (150) ;

sélectionner (S104), en fournissant l'ensemble de conditions d'utilisateur en tant qu'entrée dans une base de données (140), une matrice de canal à partir de la base de données (140), la base de données (140) comprenant un ensemble de matrices de canal entraînées hors ligne ; et décoder (S106) des données reçues pour le dispositif terminal (150) à l'aide de la matrice de canal sélectionnée.

Fig. 1

Fig. 10

Fig. 2

Fig. 3

**S102**
Receive data from terminal device

**S104**
Select channel matrix from database

**S106**
Decode received data using channel matrix

**S108**
Obtain beam index from database

**S110**
Communicate using beam given by beam index

**S112**
Provide user conditions as input to offline training of database

Fig. 4

$$y = H \cdot x_{data} + n$$

$$\widehat{x_{data}} = \hat{H}_d \cdot y$$

Fig. 5

Fig. 6

Fig. 7

Fig. 8

Fig. 9

Fig. 11

**510** Host computer

**511** SW

**512** Host application

**515** HW

**516** Communication interface

**518** Processing circuitry

560

**520** Base station

**521** SW

**525** HW

**526** Communication interface

**527** Radio interface

**528** Processing circuitry

570

500

**530** Terminal device

**531** SW

**532** Client application

**535** HW

**537** Radio interface

**538** Processing circuitry

550

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109756432 A